Europäisches Patentamt

European Patent Office

Office européen des brevets

(19)

(11) Veröffentlichungsnummer : **0 062 748**
**B1**

(12) **EUROPÄISCHE PATENTSCHRIFT**

(45) Veröffentlichungstag der Patentschrift :
15.05.85

(21) Anmeldenummer : 82101470.1

(22) Anmeldetag : 26.02.82

(51) Int. Cl.⁴ : **B 01 D 19/04**

(54) Verfahren zur Herstellung von Antischaummittel für wässrige Systeme.

(30) Priorität : 09.04.81 DE 3114268

(43) Veröffentlichungstag der Anmeldung :
20.10.82 Patentblatt 82/42

(45) Bekanntmachung des Hinweises auf die Patenterteilung : 15.05.85 Patentblatt 85/20

(84) Benannte Vertragsstaaten :
AT BE CH DE FR GB IT LI NL SE

(56) Entgegenhaltungen :
EP-A- 0 023 533
EP-A- 0 032 538
DE-A- 1 544 001
FR-A- 1 577 613
FR-A- 2 399 858
US-A- 3 250 727

(73) Patentinhaber : Degussa Aktiengesellschaft
Weissfrauenstrasse 9
D-6000 Frankfurt am Main 1 (DE)

(72) Erfinder : Giesselmann, Günter, Dr.
Gravenbrucherweg 17
D-6056 Heusenstamm (DE)
Erfinder : Günther, Kurt, Dr.
Alzenauer Strasse 78
D-6458 Rodenbach (DE)

EP 0 062 748 B1

Jouve, 18, rue St-Denis, 75001 Paris, France

**0 062 748**

## Beschreibung

Die Erfindung betrifft die Herstellung von Antischaummitteln für wäßrig-alkalische Systeme.

Es ist bekannt, daß feinteilige Kieselsäuren in Organpolysiloxanen, gegebenenfalls unter Erhitzen eingearbeitet, Schaumbildung verhindern bzw. vermeiden können.

In der US-A-3 113 930 wird die Herstellung eines Antischaummittels durch Erhitzen von feinverteiltem Füllstoff wie Siliciumdioxid mit einem vielfachen Überschuß an einem flüssigen Methylpolysiloxan auf über 350 °C, der dann unter Verwendung eines speziellen Emulgators mit Wasser emulgiert wird, beschrieben. Dieses Verfahren ist jedoch ausserordentlich umständlich und verwendet außerdem einen speziellen Emulgator. Weiterhin weist dieses Verfahren den Nachteil auf, daß bei Temperaturen von 350 °C und darüber eine starke Depolymerisierung des Dimethylpolysiloxans stattfindet.

Aus der älteren Anmeldung gemäß EP-A2-0 032 538 ist ein Verfahren zur Herstellung von sedimentationsstabilen Schaumbekämpfungsmitteln bekannt, bei welchem eine strahlvermahlene Kieselsäure mit einem Dimethylpolysiloxanöl vermischt wird.

Die DE-C-17 69 940 beschreibt Antischaummittel für wäßrigalkalische Flüssigkeiten mit langanhaltender Wirkung.

Zu deren Herstellung wird ein Gemisch von mindestens 70 Gew.-% eines Organosiloxanpolymeren mit einer Viskosität von etwa 5 bis etwa 100 000 Centistokes, gemessen bei 25 °C, sowie mindestens 0,5 Gew.-% eines feinverteilten anorganischen Füllstoffes, wie z. B. Siliciumdioxid, und 0,01 bis 1 Gew.-% eines basischen Katalysators auf Temperaturen zwischen 100 und 300 °C erhitzt. Gemäß den Beispielen der DE-C-17 69 940 wird eine maximale Temperatur von 150 °C verwendet. Optimale Entschäumer mit hoher Wirksamkeit erhält man aber nur bei Temperaturen von 180 °C bis 220 °C. Bei der Zugabe von wässrigem Alkali, wie sie in der DE-C-17 69 940 beschrieben wird, kann man aber diese Temperaturen nicht anwenden, weil sich sonst — bedingt durch die Reaktion des Alkali mit dem Dimethylpolysiloxan — Gemische von übelriechenden cyclischen Polysiloxanen in nicht unerheblicher Menge bilden.

Gegenstand der Erfindung ist ein Verfahren zur Herstellung von Antischaummitteln für wäßrige Systeme durch Mischen von Organosiloxanpolymeren mit einer fein verteilten Kieselsäure, welches dadurch gekennzeichnet ist, daß man 90-99,5 Gew.-% eines Organosiloxanpolymeren mit 2-1 400 Siloxaneinheiten, entsprechend einem Molekulargewicht von 162-103 000, mit 0,5-10 Gew.-% einer gefällten, mehrfach strahlvermahlenen Kieselsäure, die nach der Fällung einen pH-Wert von 5 bis 7 aufweist und die bei dem ersten oder zweiten Strahlvermahlungsvorgang durch Zugabe von alkalischen Lösungen auf einen pH-Wert von 8-11 eingestellt wird und deren physikalisch-chemische Kenndaten in folgendem Bereich liegen :

| Oberfläche nach BET | m²/g | 155-300 |
| Porendurchmesser (maximal) | nm | 8 - 16 |
| Porendurchmesser (durchschnittlich) | nm | 11 - 13 |
| Porenvolumen | ml/g | 0,3 - 1,2 |
| Korngröße (Sekundärteilchen) | μm | ≦ 3 |

vermischt, dieses Gemisch anschließend bei einem Druck von 250-350 bar und bei 25-100 °C homogenisiert, unter Rühren auf 100-300 °C für eine Zeit von 0,1 bis 24 Stunden erhitzt und nach Abkühlung erneut homogenisiert.

Gemäß einer besonderen Ausführungsform der Erfindung kann man das Reaktionsgemisch während dem Erhitzungsvorgang evakuieren. Das Evakuieren kann während des gesamten oder auch nur zeitweisen Erhitzens durchgeführt werden. So kann beispielsweise die gesamte Erhitzungszeit auf 180 °C 6 Stunden betragen, davon wird nur während der letzten Stunde Vakuum angelegt. Anschließend kann die Mischung während des Evakuierens abgekühklt werden. Das Erhitzen selbst kann vorzugsweise auf eine Temperatur von 160 bis 190 °C erfolgen. Die Dauer des Erhitzens kann vorzugsweise 3 bis 8 Stunden betragen.

In einer weiteren Ausführungsform der Erfindung werden vorzugsweise 2,5 bis 7,5 Gew.-% auf pH 8,3-9,0 alkalisierter Kieselsäure mit einem Organosiloxanpolymeren vermischt, homogenisiert und das Gemisch 3 bis 6 Stunden auf 160 bis 190 °C, insbesondere 180 °C erhitzt.

Als Organopolysiloxan kann man ein Dimethylpolysiloxan mit 90-810 Siloxaneinheiten entsprechend einem Molekulargewicht von 6 700-60 000 und einer Viskosität von 1 bis 100 cm²/s (100-10 000 cSt), insbesondere ein Dimethylpolysiloxan mit 280-406 Siloxaneinheiten verwenden. Das Mengenverhältnis von Kieselsäure zu Siloxan kann in dem erfindungsgemäß hergestellten Antischaummittel 0,5 bis 10 Teile, vorzugsweise 5 bis 8 Teile Kieselsäure und 90 bis 99,5 Teile, vorzugsweise 92 bis 95 Teile Siloxan betragen.

Eine weitere Ausführungsform der Erfindung beruht darauf, daß die beim ersten Mahlvorgang alkalisch gestellte Kieselsäure einem zweiten Strahlvermahlungsvorgang unterworfen wird. Es ist jedoch auch möglich, die Kieselsäure erst während des zweiten Strahlvermahlungsvorganges zu alkalisieren.

Den zweiten Strahlvermahlungsvorgang kann man bei 50 bis 100 °C, vorzugsweise bei 80 °C durchführen.

2

Für die Alkalisierung der Kieselsäure kann man Stoffe aus der Gruppe der Alkalimetall- und Erdalkalimetalloxide, -hydroxide, -alkoxyde, Tetralkylammoniumhydroxide und Monoalkyl-, Dialkyl- und Trialkylamine verwenden.

Durch die Alkalisierung der Kieselsäure während des Strahlvermahlens ist gewährleistet, daß die wäßrige Alkalilösung völlig gleichmäßig in die Poren der Kieselsäure eindringen kann. Wird dagegen Kieselsäure und Alkali getrennt in das Dimethylpolysiloxan eingearbeitet wie in DE-C-17 69 940 beschrieben, werden die Kieselgelporen bevorzugt von dem in größen Überschuß vorhandenen Dimethylpolysiloxan abgedeckt und das Alkali bewirkt eher die Bildung von cyclischen Oligomeren aus dem Dimethylpolysiloxan als daß es den Hydrophobierungsvorgang fördert.

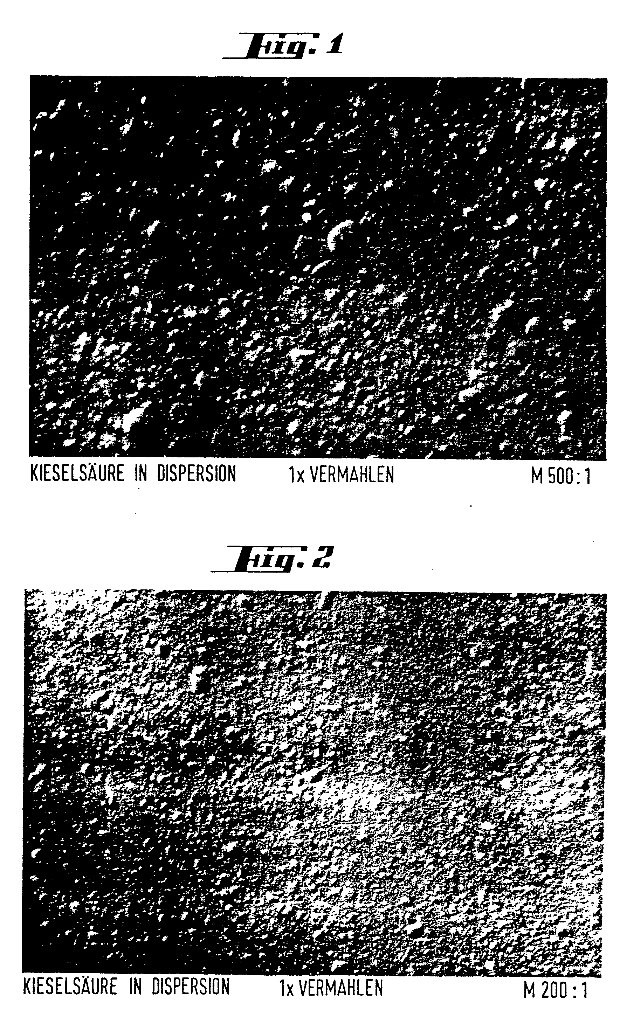

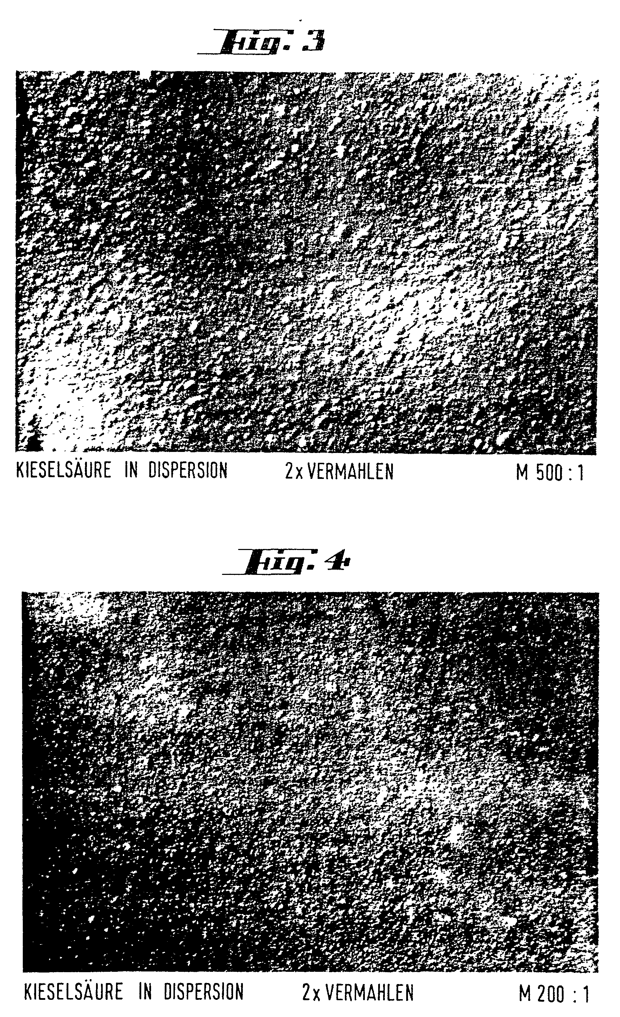

Eine nach dem Alkalisierungsvorgang angeschlossene zweite-Strahlvermahlung bewirkt eine weitere Zerkleinerung und es ergibt sich gegenüber einer Mahlung eine außerordentliche Verbesserung der Verteilungskurve der Sekundärteilchen und damit die Voraussetzung für einen sedimentationsstabiles und gutes Antischaummmittel. Der Vermahlungseffekt kann deutlich aus dem Vergleich der Figuren 1 und 2 mit den Figuren 3 und 4 ersehen werden. Es zeigen die Figuren 1 bis 4 je eine lichtmikroskopische Aufnahme (Gerät Orthoplan der Firma Leitz) einer Kieselsäuredispersion. Die Figuren 1 und 2 zeigen die Kieselsäuredispersion nach der ersten Vermahlung (Fig. 1 = Maßstab 500 : 1, Fig. 2 = Maßstab 200 : 1). Die Figuren 3 und 4 zeigen die Kieselsäuredispersion nach der zweiten Vermahlung (Fig. 3 = Maßstab 500 : 1 und Fig. 4 = Maßstab 200 : 1).

In einer bevorzugten Ausführungsform kann man eine zweifach strahlvermahlene Kieselsäure einsetzen, wobei die Alkalisierung vorzugsweise bei der zweiten Strahlvermahlung durchgeführt wird. Bei der Strahlvermahlung kann jede bekannte Art der Strahlvermahlung durchgeführt werden. In einer bevorzugten Ausführungsform der Erfindung kann eine Dampfstrahlvermahlung durchgeführt werden. Die derart erhaltene Kieselsäure kann eine mittlere Teilchengrösse von maximal 3 μm aufweisen.

Die erfindungsgemäß nach der Strahlvermahlung weiterverarbeitete Kieselsäure kann eine BET-Oberfläche von $300 \pm 30$ m$^2$/g, ein Porenvolumen von 0,6 bis 1,2 ml/g, ein Porendurchmesser von 8 bis 16 nm, beziehungsweise eine BET-Oberfläche von 155 bis 350 m$^2$/g, ein Porenvolumen von 0,3 bis 0,6 ml/g und einen Porendurchmesser von 10 bis 14 nm aufweisen.

Für beide Kieselsäuren beträgt der durchschnittliche Porendurchmesser 11 bis 13 nm. Beide Kieselsäuren weisen einen pH-Wert von 6,5 auf.

Überraschenderweise wird nämlich die Verteilung der Sekundärteilchen, die im Falle von Kieselsäuren sehr hart sind, durch einen angeschlossenen Homogenisierungsvorgang des nahezu fertigen Antischaummmittels praktisch nicht verändert, sondern nur etwas geglättet. Der Typ des verwendeten Homogenisators ist nicht entscheidend. Von entscheidender Bedeutung ist vielmehr, daß mit dem Homogenisator ein Druck von mindestens 250 bis 400 bar erreicht werden kann. Beim erfindungsgemäßen Verfahren beträgt der Druck bei der ersten Homogenisierung 250 bis 350 bar. Die Temperatur kann bei der Homogenisierung vorzugsweise 25 bis 35 °C betragen.

Bei der zweiten Homogenisierung kann der Druck vorzugsweise 250 bis 350 bar und die Temperatur vorzugsweise 65 bis 100 °C betragen. Für eine im Zentrifugat stabile Emulsion sind Sekundärteilchen von ⩽ 3 μm erforderlich.

Für viele Einsatzgebiete ist ein geruchsfreies Antischaummittel erforderlich. Hierfür und auch für die Lagerstabilität erwies sich als wichtig, daß das Reaktionsgemisch nach dem Erhitzen evakuiert und der zweiten Homogenisierungsschritt bei einer Temperatur zwischen 50-100 °C durchgeführt wird. Das erfindungsgemäß hergestellte Antischaummittel kann bei Harzverkochungen in der Lackindustrie, bei der Latexherstellung in der Kautschukindustrie, bei der Papier- und Leimherstellung, zur Oberflächenentschäumung von Mineralölen, bei der Bitumenverkochung, zur Verhinderung des Schaumes von Kesselwasser in Dampfkesseln in Waschmittelformulierungen, bei der Verarbeitung von Farbdruckpasten, in der pharmazeutischen Chemie und der chemischen Technologie, beispielsweise bei der Herstellung von Aminosäuren eingesetzt werden.

Das erfindungsgemäße Verfahren wird an Hand der folgenden Beispiele näher erläutert und beschrieben :

Beispiel 1

7,5 kg einer gefällten Kieselsäure werden mit 92,5 kg eines Dimethylpolysiloxanes mit einer Viskosität von 10 cm$^2$/s (1 000 cSt) bei 25 °C 12 Stunden in einem geeigneten Behälter gerührt. Das Gemisch wird anschließend bei Raumtemperatur und 250 bar durch einen Hochdruckhomogenisator geschleust und darauf in einem geeigneten Kessel unter Rühren 6 Stunden auf 180 °C erhitzt. Nach dem Erhitzen wird evakuiert, abgekühlt, entspannt und bei 250/100 bar zweistufig homogenisiert.

Die verwendete Kieselsäure ist eine gefällte, zweimal strahlvermahlene Kieselsäure, die beim ersten Strahlvermahlungsprozeß auf pH 8,3 gestellt wurde und folgende physikalisch-chemische Kenndaten aufweist :

(Siehe Tabelle Seite 4 f.)

| | | |
|---|---|---|
| Oberfläche nach BET | m²/g | 160 |
| Porendurchmesser (maximal) | nm | 10-14 |
| Porendurchmesser (durchschnittlich) | nm | 11,2 |
| Porenvolumen | ml/g | 0,36 |
| Korngröße der Sekundärteilchen | µm | ≦ 3 |

Die BET-Oberfläche wird gemäß Brunnauer, Emmet und Teller, Hournal of American Chemical Soc. Bd. 60 (1938) S. 309-319 bestimmt.

Das Porenvolumen und der Porendurchmesser wird gemäß Cranston und Inkley Anderance Katal. Bd. 9, 1957, S. 143 bestimmt.

Die Korngröße der Sekundärteilchen wird bestimmt, indem man eine Raster-Elektronenmikrospische Aufnahme bei 1 000 bis 3 000-facher Vergrösserung herstellt und dann die Teilchen mittels dem Teilchengrössenzählgerät TG Z3 der Firma Zeiss auswertet.

Die Strahlvermahlung der Kieselsäure wird in einem Jeto-Mizer 0808 (Durchsatz 500 kg/h) mit 16 bar Dampf durchgeführt.

## Beispiel 2

5,0 kg einer gefällten Kieselsäure werden mit 95,0 kg eines Dimethylpolysiloxans mit einer Viskosität von 10 cm²/s (1 000 cSt) bei 25 °C 12 Stunden in einem geeigneten Behälter gerührt. Das Gemisch wird anschließend bei Raumtemperatur und 350 bar durch einen Hochdruckhomogenisator gefahren und darauf in einem geeigneten Kessel unter Rühren 5 Stunden auf 170 °C erhitzt. Danach wird evakuiert, abgekühlt, entspannt und einstufig bei 350 bar homogenisiert.

Die verwendete Kieselsäure ist eine gefällte, zweimal strahlvermahlene Kieselsäure, die beim ersten Strahlvermahlungsvorgang auf pH 8,6 eingestellt wurde und folgende physikalisch-chemische Kenndaten aufweist :

| | | |
|---|---|---|
| Oberfläche nach BET | m²/g | 300 |
| Porendurchmesser (maximal) | nm | 8-16 |
| Porendurchmesser (durchschnittlich) | nm | 11,3 |
| Porenvolumen | ml/g | 0,77 |
| Korngröße der Sekundärteilchen | µm | ≦ 3 |

## Beispiel 3

2,5 kg der gemäß Beispiel 1 verwendeten gefällten Kieselsäure werden mit 97,5 kg eines Dimethylpolysiloxans mit einer Viskosität von 10 cm²/s (1 000 cSt) bei 25 °C 12 Stunden in einem geeigneten Behälter gerührt, darauf bei 350 bar durch einen Hochdruckhomogenisator gefahren und dann in einem geeigneten Kessel unter Rühren 6 Stunden auf 180 °C erhitzt. Nach dem Erhitzen wird evakuiert, abgekühlt, entspannt und bei 350 bar homogenisiert.

## Beispiel 4

7,5 kg der gemäß Beispiel 1 verwendeten gefällten Kieselsäure, jedoch nur 1x strahlvermahlen werden mit 92,5 kg eines Dimethylpolysiloxans mit einer Viskosität von 10 cm²/s (1 000 cSt) bei 25 °C 12 Stunden in einem geeigneten Behälter gerührt. Das Gemisch wird anschließend bei Raumtemperatur und 250 bar durch einen Hochdruckhomogenisator geschleust und darauf in einem geeigneten Kessel unter Rühren 6 Stunden 180 °C erhitzt. Nach dem Erhitzen wird evakuiert, abgekühlt, entspannt und bei 250/100 bar zweistufig homogenisiert.

Die 2x strahlvermahlene Kieselsäure bewirkt gegenüber der 1x strahlvermahlenen Kieselsäure auf Grund der größeren Teilchenfeinheit eine hohe Lagerstabilität (= 12 Monate). Die Entschäumerwirksamkeit wird ebenfalls verbessert.

Die an Hand der Beispiele erläuterten Antischaummittel weisen eine hohe Lagerstabilität auf. Nach 12 Monaten konnte noch keine Sedimentation festgestellt werden. Die Qualität wird nach Herstellung außerdem mit dem eingangs erwähnten Zentrifugentest geprüft.

## Zentrifugentest

In einer Laborzentrifuge werden von jedem zu prüfenden Entschäumer 50 g in ein Zentrifugenglas (95 ml Inhalt) eingewogen und 10 Minuten mit 3 000 Umdrehungen/min zentrifugiert. Bei der Betrachtung darf sich kein Bodensatz gebildet haben. Zur weiteren Überprüfung wird der Inhalt vorsichtig ausgegossen und das Zentrifugenglas auf ein Filterpapier auf den Kopf gestellt und vollständig auslaufen lassen. Auch bei diesem Prüfvorgang soll kein Sedimentationsrückstand sichtbar sein.

Die Entschäumerwirksamkeit wird mit dem nachfolgenden beschriebenen Test geprüft :

4

# 0 062 748

Schaumtest

1 g Antischaummittel (Beispiele 1-4) werden mit 49 g Nonylphenolpolyäthylenglykoläther mit 6 Oxäthyleneinheiten je Molekül homogen verrührt und mittels einer automatischen Pipette 100 μl, 300 und 500 μl dieser Mischung zu 50 ml einer 0,1 %igen Mersolat H-Lösung, (ein stark schäumendes Netzmittel) die in einem Becherglas vorgelegt wird, pipettiert und vollständig verteilt. Der Inhalt des Becherglases wird darauf in einen 250 ml Schüttelzylinder eingefüllt und verschlossen.

Zur Schaumerzeugung wird 25 mal kräftig auf und nieder geschüttelt (jede Richtungsänderung gleich eine Schüttelbewegung) und das Volumen Flüssigkeit und Schaum aufgezeichnet. Als Schaumhöhe wird Gesamtvolumen minus 50 ml (Volumen der ursprünglichen Flüssigkeit) gewertet. Nach dem Schütteltest am 1. Tag wird die gleiche Lösung am 10. Tag nochmals geschüttelt. Als Blindwert werden 100 μl der reinen Nonylphenolpolyäthylenglykoläther-Lösung zu 50 ml der 0,1 %igen Mersolat H-Lösung pipettiert, vollständig verteilt und wie angegeben geschüttelt.

Die Ergebnisse des Schaumtestes sind in der Tabelle 1 dargestellt.

Tabelle 1

| Bezeichnung der Probe | Zeit der Ablesung (s) nach Schüttel vorgang | Schaumvolumen (ml) nach 10 Tag. | | % Antischaummittel in der Verdünnung |
|---|---|---|---|---|
| Beisp. 1 | 90 | 40 | 60 | 0,004 (100 μl) |
| Beisp. 2 | 90 | 20 | 40 | 0,004 (100 μl) |
| Beisp. 3 | 90 | 60 | 100 | 0,004 (100 μl) |
| Beisp. 4 | 90 | 80 | 120 | 0,004 (100 μl) |
| Blindwert | 90 | 200 | 200 | 0,004 (100 μl) |
| Beisp. 1 | 180 | 6 | 12 | 0,012 (300 μl) |
| Beisp. 2 | 180 | 5 | 12 | 0,012 (300 μl) |
| Beisp. 3 | 180 | 8 | 15 | 0,012 (300 μl) |
| Beisp. 4 | 180 | 12 | 25 | 0,012 (300 μl) |
| Blindwert | 180 | 170 | 180 | 0,012 (300 μl) |
| Beisp. 1 | 60 | 10 | 21 | 0,020 (500 μl) |
| Beisp. 2 | 60 | 3 | 7 | 0,020 (500 μl) |
| Beisp. 3 | 60 | 15 | 26 | 0,020 (500 μl) |
| Beisp. 4 | 60 | 20 | 50 | 0,020 (500 μl) |
| Blindwert | 60 | 170 | 190 | 0,020 (500 μl) |

Die Tabelle 1 gibt Auskunft über die Wirksamkeit der erfindungsgemäßen Antischaummittel.

Mit der reinen Mersolat H-Lösung (Blindwert) wird Schaum erzeugt, der nach 90 Sekunden noch eine Höhe von 200 ml aufweist. Mit dem Antischaummittel gemäß Beispiel 1 kann die Schaumhöhe auf 40 ml bzw. nach 10 Tagen auf 60 ml reduziert werden. Mit dem Antischaummittel gemäß Beispiel 2 kann die Schaumhöhe auf 20 ml bzw. 40 ml nach 10 Tagen reduziert werden.

Aus dem Beispiel ergibt sich, daß ein Antischaummittel, welches nur einmal strahlvermahlene Kieselsäure enthält nicht die Qualitäten aufweist, die das Antischaummittel mit einer zweimal strahlvermahlenen Kieselsäure zeigt.

Erhöht man die Konzentration des Antischaummittels, so zeigt sich, daß das Antischaummittel gemäß Beispiel 2 das beste Ergebnis bewirkt.

Die Ablesezeiten 90, 180 und 60 Sekunden wurden gewählt, um die Qualitätsunterschiede deutlich sichtbar zu machen.

Würde man beispielsweise in der 3. Querspalte statt bei 60 Sekunden erst nach 90 oder 180 Sekunden nach dem Schüttelvorgang ablesen, wäre der Schaum bei allen Beispielen fast vollständig zusammengeschrumpft und es wären keine Unterschiede zu erkennen.

Das gleiche gilt ebenso für die angewandten Konzentrationen des Antischaummittels. Würde man diese wesentlich erhöhen, z. B. auf 0,1 %, würde sich quasi dein Schaum bilden bzw. nach 1 bis 2 Sekunden zusammenbrechen.

**Patentansprüche**

1. Verfahren zur Herstellung von Antischaummitteln für wässrige Systeme durch Mischen von Organosiloxanpolymeren mit einer feinverteilten Kieselsäure, dadurch gekennzeichnet, daß man 90-99,5 Gew.-% eines Organosiloxanpolymeren mit 2 bis 1 400 Siloxaneinheiten entsprechend einem

5

Molekulargewicht von 162-103 000 mit 0,5-10 Gew.-% einer gefällten, mehrfach strahlvermahlenen Kieselsäure, die nach der Fällung einen pH-Wert von 5 bis 7 aufweist und die bei dem ersten oder zweiten Strahlvermahlungsvorgang durch Zugabe von alkalischen Lösungen auf einen pH-Wert von 8-11 eingestellt wird und deren physikalisch-chemische Kenndaten in folgendem Bereich liegen :

| | | |
|---|---|---|
| Oberfläche nach BET | m²/g | 155 - 300 |
| Porendurchmesser (maximal) | nm | 8 - 16 |
| Porendurchmesser (durchschnittlich) | nm | 11 - 13 |
| Porenvolumen | ml/g | 0,3 - 1,2 |
| Korngröße (Sekundärteilchen) | µm | ≤ 3, |

vermischt, dieses Gemisch anschließend bei einem Druck von 250-350 bar und bei 25-100 °C homogenisiert, unter Rühren auf 100-300 °C für eine Zeit von 0,1 bis 24 Stunden erhitzt und nach Abkühlung erneut homogenisiert.

2. Verfahren nach Anspruch 1, dadurch gekennzeichnet, daß man das Reaktionsgemisch während dem Erhitzen evakuiert.

3. Verfahren nach Anspruch 1, dadurch gekennzeichnet, daß man 2,5-7,5 Gew.-% auf pH 8,3-9,0 alkalisierte Kieselsäure mit einem Organosiloxanpolymeren vermischt, homogenisiert und das Gemisch 3-6 Stunden auf 160-190 °C, insbesondere 180 °C, erhitzt.

4. Verfahren nach Anspruch 1, dadurch gekennzeichnet, daß man die alkalisierte Kieselsäure einem zweiten Strahlvermahlungsvorgang unterwirft.

5. Verfahren nach Anspruch 1, dadurch gekennzeichnet, daß man für die Alkalisierung der Kieselsäure Stoffe aus der Gruppe der Alkalimetall- und Erdalkalimetalloxide, -hydroxide, -alkoxide, Tetraalkylammoniumhydroxide und Monoalkyl-, Dialkyl- und Trialkylamine verwendet.

6. Verfahren nach Anspruch 1, dadurch gekennzeichnet, daß man als Organosiloxanpolymeres ein Dimethylpolysiloxan mit 90-810 Siloxaneinheiten entsprechend einem Molekulargewicht von 6 700-60 000 und einer Viskosität von 1 bis 100 cm²/s (100-10 000 cSt) insbesondere ein Dimethylpolysiloxan mit 280-406 Siloxaneinheiten, verwendet.

7. Verfahren nach Anspruch 1, dadurch gekennzeichnet, daß man den zweiten Strahlvermahlungsvorgang bei 50-100°, vorzugsweise bei 80 °C, durchführt.

## Claims

1. Process for the production of anti-foaming agents for aqueous systems by mixing organosiloxane polymers with a finely-divided silica, characterised in that from 90 to 99.5 % by weight of an organosiloxane polymer having from 2 to 1 400 siloxane units corresponding to a molecular weight of from 162 to 103 000 are mixed with from 0.5 to 10 % by weight of a precipitated silica which has more than once been jet-ground, has a pH of from 5 to 7 after precipitation, is adjusted to a pH of from 8 to 11 during the first or second jet-grinding operation by addition of alkaline solutions and the physical-chemical characteristics of which lie in the following ranges :

| | | | | |
|---|---|---|---|---|
| BET surface | m²/g | from 155 | to | 300 |
| Pore diameter (maximum) | nm | from 8 | to | 16 |
| Pore diameter (average) | nm | from 11 | to | 13 |
| Pore volume | ml/g | from 0.3 | to | 1.2 |
| Grain size (secondary particles) | µm | ≤ 3 | | |

this mixture is then homogenised under a pressure of from 250 to 350 bars and at from 25 to 100 °C, is heated with stirring to from 100 to 300 °C for a period of from 0.1 to 24 hours and is again homogenised after cooling.

2. Process according to claim 1, characterised in that the reaction mixture is evacuated during heating.

3. Process according to claim 1, characterised in that from 2.5 to 7.5 % by weight of alkalized silica at a pH value of from 8.3 to 9.0 are mixed with an organosiloxane polymer, homogenised and the mixture is heated for from 3 to 6 hours to from 160 to 190 °C, more particularly 180 °C.

4. Process according to claim 1, characterised in that the alkalized silica undergoes a second jet-grinding operation.

5. Process according to claim 1, characterised in that materials from the group of alkali and alkaline earth metal oxides, -hydroxides, -alkoxides, tetraalkylammonium hydroxides and monoalkyl-, dialkyl- and trialkylamines are used to alkalize the silica.

6. Process according to claim 1, characterised in that a dimethylpolysiloxane having from 90 to 810 siloxane units corresponding to a molecular weight of from 6 700 to 60 000 and a viscosity of from 1 to 100 cm²/s (from 100 to 10 000 cSt), more particularly a dimethylpolysiloxane having from 280 to 406 siloxane units is used.

6

7. Process according to claim 1, characterised in that the second jet-grinding operation is carried out at from 50 to 100°, preferably at 80 °C.

## Revendications

1. Procédé pour la fabrication d'agents antimousses pour système aqueux, par mélange d'organopolysiloxanes polymères avec un acide silicique finement dispersé, caractérisé en ce que l'on mélange 90 à 99,5 % en poids d'un organopolysiloxane polymère contenant 2 à 1 400 unités siloxane correspondant à un poids moléculaire de 162 à 103 000, avec 0,5 à 10 % en poids d'un acide silicique précipité, plusieurs fois broyé au jet, qui présente, après la précipitation, un pH de 5 à 7 et qui est ajusté, au cours de la première ou de la seconde opération de broyage au jet, par addition de solutions alcalines, à un pH d'une valeur de 8 à 11, et dont les caractéristiques physico-chimiques se situent dans les ordres de grandeur suivants :

| | | |
|---|---|---|
| surface suivant BET | $m^2/g$ | 155 à 300 |
| diamètre des pores (maximum) | nm | 8 à 16 |
| diamètre des pores (moyen) | nm | 11 à 13 |
| volume des pores | ml/g | 0,3 à 1,2 |
| grosseur des particules (particules secondaires) | $\mu$ | $\leqslant 3$ |

homogénéise ce mélange, ensuite, sous une pression de 250 à 350 bars et à 25 à 100 °C, chauffe, tout en agitant, à 100 à 300 °C pendant une durée de 0,1 à 24 heures, et homogénéise à nouveau après refroidissement.

2. Procédé suivant la revendication 1, caractérisé en ce que l'on soumet le mélange réactionnel au vide pendant le chauffage.

3. Procédé suivant la revendication 1, caractérisé en ce que l'on mélange 2,5 à 7,5 % en poids d'acide silicique alcanisé à pH 8,3 à 9 avec un organosiloxane polymère, homogénéise et chauffe ce mélange 3 à 6 heures à 160 à 190 °C ou mieux à 180 °C.

4. Procédé suivant la revendication 1, caractérisé en ce que l'on soumet l'acide silicique alcalinisé à une seconde opération de broyage au jet.

5. Procédé suivant la revendication 1, caractérisé en ce que l'on utilise, pour l'alcalinisation de l'acide silicique, des substances du groupe des oxydes hydroxydes, alcoxydes de métaux alcalins et alcalino-terreux, l'hydroxyde de tétraalcoylammonium et les monoalcoyle, dialcoyle et trialcoylamines.

6. Procédé suivant la revendication 1, caractérisé en ce que l'on utilise comme organosiloxane polymère, un diméthylpolysiloxane contenant 90 à 810 unités siloxane, correspondant à un poids moléculaire de 6 700 à 60 000 et à une viscosité de 1 à 100 $cm^2/s$ (100 à 10 000 cSt), en particulier un diméthylpolysiloxane avec 280 à 406 unités siloxane.

7. Procédé suivant la revendication 1, caractérisé en ce que l'on effectue la seconde opération de broyage au jet à 50 à 100 °C, de préférence à 80 °C.

## Fig. 1

KIESELSÄURE IN DISPERSION 1x VERMAHLEN M 500 : 1

## Fig. 2

KIESELSÄURE IN DISPERSION 1x VERMAHLEN M 200 : 1

1

## Fig. 3

KIESELSÄURE IN DISPERSION     2x VERMAHLEN     M 500 : 1

## Fig. 4

KIESELSÄURE IN DISPERSION     2x VERMAHLEN     M 200 : 1

2